(19) Europäisches Patentamt
European Patent Office
Office européen des brevets

(11) **EP 3 427 560 B1**

(12) **EUROPÄISCHE PATENTSCHRIFT**

(45) Veröffentlichungstag und Bekanntmachung des Hinweises auf die Patenterteilung:
**03.01.2024   Patentblatt 2024/01**

(51) Internationale Patentklassifikation (IPC):
**A01B 59/042** (2006.01)    **B60D 1/44** (2006.01)
**A01B 59/00** (2006.01)    **A01B 69/08** (2006.01)

(21) Anmeldenummer: **18182757.7**

(22) Anmeldetag: **10.07.2018**

(52) Gemeinsame Patentklassifikation (CPC):
**A01B 59/004; A01B 69/006;** A01B 59/008;
A01B 59/042; B60D 1/44

(54) **ANHÄNGEVORRICHTUNG**

TOWING DEVICE

DISPOSITIF D'ATTELAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.07.2017   DE 102017212047**

(43) Veröffentlichungstag der Anmeldung:
**16.01.2019   Patentblatt 2019/03**

(73) Patentinhaber: **Deere & Company**
**Moline, IL 61265 (US)**

(72) Erfinder: **Billich, Manuel**
**68163 Mannheim (DE)**

(74) Vertreter: **Dehnhardt, Florian Christopher**
**John Deere GmbH & Co. KG**
**Global Intellectual Property Services**
**John-Deere-Straße 70**
**68163 Mannheim (DE)**

(56) Entgegenhaltungen:
EP-A1- 2 889 166    EP-A1- 2 893 794
DE-A1-102014 113 448    US-A1- 2004 021 292
US-A1- 2014 343 802    US-A1- 2017 079 191

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine Anhängevorrichtung für ein landwirtschaftliches Arbeitsfahrzeug, umfassend ein Kupplungsglied.

Es sind verschiedene Kupplungsvorrichtungen für landwirtschaftliche Arbeitsfahrzeuge bekannt mittels derer Anhänger, Anbaugeräte oder Arbeitsgeräte an das Zugfahrzeug, beispielsweise einen Traktor, ankoppelbar sind. In der Landwirtschaftstechnik werden immer häufiger schlagkräftigere Anbaugeräte eingesetzt, die einen entsprechend leistungsfähigen Traktor voraussetzen.

Bei Anbaugeräten mit einem eigenen Fahrwerk wird aufgrund der steigenden Stützlasten vorzugsweise eine Kugelkopfkupplung insbesondere in einer Unten-Anhängungsausführung eingesetzt. Bei einer Unten-Anhängungsausführung verläuft eine Gelenkwelle, die beispielsweise für den Betrieb des Anbaugeräts benötigt wird, oberhalb der Kugelkopfkupplung.

Große Gespanne haben den Nachteil, dass diese einen relativ großen Wendekreis aufweisen. Der Wendekreis wird meist nicht durch den maximalen Traktorlenkwinkel begrenzt, sondern durch den Einschlagwinkel zwischen Traktor und Anbaugerät, da es gilt, eine Berührung zwischen der Anbaugerätedeichsel und den Hubwerksunterlenkern bzw. den Traktorhinterrädern zu vermeiden.

Zur Gewichts- und Achslastoptimierung können an den Hinterradfelgen eines Traktors Radgewichte montiert werden. Die Montage und Demontage von Radgewichten ist relativ aufwendig. Zudem erhöhen Radgewichte das Massenträgheitsmoment der Räder. Dies wirkt sich negativ auf das Beschleunigungs- und Bremsverhalten des Traktors aus. Weiterhin ist keine stufenlose Achslastanpassung während des Fahrbetriebs möglich.

Bei herkömmlichen Anhängevorrichtungen nach dem Stand der Technik kann das Kupplungselement von der Kabine häufig nicht eingesehen werden. Dies erschwert den Anhängeprozess.

In der DE 10 2013 211 510 A1 wird eine Anhängevorrichtung beschrieben, die heckseitig an einem landwirtschaftlichen Arbeitsfahrzeug angebracht ist. Die Anhängevorrichtung umfasst zwei am Fahrzeugheck abgestützte und vertikal ausgerichtete Seitenwangen sowie eine ein Kupplungsglied tragende Platte. Die Platte kann in einer Transportposition oder einer Arbeitsposition befestigt werden.

Die DE 10 2013 211 516 A1 beschreibt ebenfalls eine Anhängevorrichtung für ein landwirtschaftliches Arbeitsfahrzeug, umfassend zwei am Heckfahrzeug abgestützte und vertikal ausgerichtete Seitenwangen und eine, ein Kupplungsglied tragende Platte. Die Platte ist in jeweils in einander zugewandte horizontale Führungsnuten an unteren Enden der Seitenwangen in einer Arbeitsposition einziehbar und mittels zumindest eines Stellbolzens arretierbar. Die hinteren Enden der Seitenwangen sind so ausgeführt, dass eine geringere laterale Breite im Bereich der unteren Enden der Seitenwangen gebildet wird. EP 2889166 A1 beschreibt eine weitere aus dem Stand der Technik bekannte Anhängevorrichtung.

Der Erfindung liegt die Aufgabe zugrunde, eine Anhängevorrichtung für ein landwirtschaftliches Arbeitsfahrzeug anzugeben, das einen kleinen Wendekreis des Gespanns ermöglicht. Zudem soll die Anhängevorrichtung zu einer Lastoptimierung des landwirtschaftlichen Arbeitsfahrzeuges beitragen. Der Anhängeprozess eines Anbaugerätes soll durch die erfindungsgemäße Anhängevorrichtung erleichtert werden. Das Gespann soll durch die erfindungsgemäße Anhängevorrichtung bessere Fahr- und Bremseigenschaften aufweisen. Zudem soll ein stabiles Fahrverhalten erreicht werden.

Diese Aufgabe wird erfindungsgemäß durch eine Anhängevorrichtung mit den Merkmalen des Anspruchs 1 gelöst.

Bevorzugte Varianten sind den Unteransprüchen, der Beschreibung und den Zeichnungen zu entnehmen.

Erfindungsgemäß ist das Kupplungsglied der Anhängevorrichtung verschiebbar angeordnet. Zur Verschiebung steht es mit einem Aktor in Verbindung. Dabei erweist es sich als besonders günstig, das Kupplungsglied mittels eines stufenlos arbeitenden Aktors längsverschiebbar auszuführen. Im Folgenden wird unter längsverschiebbar eine Verschiebung in bzw. entgegen der Fahrtrichtung verstanden. Vorzugsweise erfolgt die Verschiebung des Kupplungsgliedes weitgehend horizontal. Unter weitgehend horizontal wird im Folgenden ein Winkel zur Horizontalen von weniger als 45°, insbesondere weniger als 30°, vorzugsweise weniger als 15° verstanden.

Bei einer Variante der Erfindung umfasst der Aktor mindestens einen Arbeitszylinder, wobei sich insbesondere Hydraulikzylinder und/oder Pneumatikzylinder eignen. Bei einer besonders vorteilhaften Ausführung der Erfindung kommt ein doppelt wirkender Zylinder zum Einsatz, der entweder hydraulisch oder pneumatisch arbeitet. Ein doppelt wirkender hydraulischer Zylinder erweist sich als besonders günstig, da meistens eine ausreichende hydraulische Leistungsquelle beim Traktor zur Verfügung steht und zudem eine verhältnismäßig einfache Realisierung möglich ist, da bei einer Hydraulik mit einem kompakten Bauraum hohe Zylinderkräfte realisierbar sind.

Ergänzend oder alternativ kann als Aktor beispielsweise auch ein Elektromotor mit Gewindespindel zum Einsatz kommen.

Als besonders günstig erweist es sich, wenn die Aufnahme der Stützlast des Kupplungsgliedes über eine Längsführung realisiert wird und nicht ausschließlich vom Aktor selbst erfolgt. Bei der Erfindung weist die Anhängevorrichtung dazu ein Führungselement auf. Dieses Führungselement nimmt Stützlasten auf, insbesondere Stützlasten, die in vertikaler Richtung wirken. Dadurch wird unter anderem der Aktor vor einer Beschädigung durch zu hohe Stützlasten bewahrt. Das Führungselement weist dazu eine Nut auf. Das Führungselement gewährleistet eine Längsverschiebung, wobei die Verschiebung weitgehend in horizontaler Richtung unter nur einem verhältnismäßig geringen Neigungswinkel von weniger als 45°, insbesondere weniger als 30°, vorzugsweise weniger als 15° zur Horizontalen erfolgt.

Bei der Erfindung steht das Kupplungsglied mit einem Halteelement in Verbindung. Bei dem Halteelement handelt es sich um eine tragende Platte. Dabei ist das Kupplungsglied fest mit dem Halteelement verbunden. Beispielsweise kann das Kupplungsglied auf der Platte angeschweißt oder durch eine Schraubverbindung befestigt sein.

Bei der Erfindung ist das Halteelement in dem Führungselement verschieblich angeordnet. Beispielsweise kann es sich bei dem Führungselement um Seitenwangen handeln, die eine Nut aufweisen, in welcher das als Platte ausgeführte Halteelement verschieblich angeordnet ist. Dadurch kann je nach Bedarf die Position des Kupplungsgliedes variiert werden.

Als besonders günstig erweist es sich dabei, wenn das Kupplungsglied stufenlos verstellbar ist. Durch die stufenlose Verschiebbarkeit des Kupplungsgliedes kann eine optimale Position des Kupplungsgliedes für den jeweiligen Anwendungsfall eingestellt werden.

Bei einer besonders vorteilhaften Variante der Erfindung, weist die Vorrichtung Sensoren auf, welche Daten erfassen können und diese dann an eine entsprechende Einheit weiterleiten, die dann in Abhängigkeit der Daten eine optimale Position des Kupplungsgliedes bestimmt und entsprechend den Aktor ansteuert, sodass dieser durch eine Längsverschiebung das Kupplungsglied in eine für die jeweilige Situation optimale Position bringt. Bei der Einheit kann es sich um eine Auswerteeinrichtung und/oder Steuereinrichtung und Regeleinrichtung handeln. Beispielsweise kann dabei ein PID-Regler oder eine speicherprogrammierbare Steuerung (SPS) zum Einsatz kommen. Es erfolgt dabei eine Anpassung der Position des Kupplungsgliedes in Abhängigkeit der erfassten Daten. Durch dieses erfindungsgemäße Verfahren wird ein optimales Fahrverhalten des Arbeitsfahrzeuges gewährleistet.

Durch die erfindungsgemäße Vorrichtung ist eine Wendekreisverringerung eines Gespanns aus Arbeitsfahrzeug und Anbaugerät möglich. Zudem kann eine Achslastverschiebung realisiert werden. Beim Ankoppeln des Anhängesystems an das Arbeitsfahrzeug ist es zudem möglich, das Kupplungsglied so zu verschieben, dass eine Sichtbarkeit von der Kabine ermöglicht wird und dadurch der Anhängevorgang erleichtert wird.

Bei dem Kupplungsglied handelt es sich um eine Kugelkopfkupplung. Dabei erweist es sich als besonders vorteilhaft, wenn die Kupplung in einer Unten-Anhängungsausführung realisiert ist.

Bei einer besonders vorteilhaften Variante der Erfindung ist das Arbeitsfahrzeug zusätzlich mit einem Frontballast ausgestattet. Dabei erweist es sich als günstig, wenn der Frontballast bewegbar, vorzugsweise längs verschiebbar, angeordnet ist. Durch die erfindungsgemäße Kombination einer schiebbaren Anhängevorrichtung mit einer bewegbaren Frontlast kann eine optimale Stabilität des Arbeitsfahrzeugs für jeden Anwendungsfall erzielt werden. Als besonders günstig erweist es sich, wenn auch während des Fahrbetriebs die Anhängevorrichtung und/oder der Frontballast in ihrer Position zum Arbeitsfahrzeug verstellbar sind. Dadurch kann die Fahrstabilität optimiert werden. Weitere Merkmale und Vorteile der Erfindung ergeben sich aus der Beschreibung von Ausführungsbeispielen anhand von Zeichnungen und aus den Zeichnungen selbst.

Dabei zeigt:

Figur 1    eine schematische Darstellung eines landwirtschaftlichen Arbeitsfahrzeugs mit einer Anhängevorrichtung sowie einem hydraulischen Aktor,

Figur 2    ein schematisches Schema eines hydraulischen Aktors,

Figur 3    eine perspektivische Darstellung einer Tragstruktur eines landwirtschaftlichen Arbeitsfahrzeuges mit Anhängevorrichtung,

Figur 4    eine vergrößerte Darstellung des in Figur 3 dargestellten Bereichs,

Figur 5    eine perspektivische Darstellung einer Anhängevorrichtung von unten,

Figur 6    eine perspektivische Darstellung Anhängevorrichtung,

Figur 7    eine Seitenansicht einer Anhängevorrichtung,

Figur 8    eine schematische Darstellung eines Arbeitsfahrzeugs zur Berechnung des Wendekreises,

Figur 9    eine schematische Darstellung eines Gespanns zur Berechnung des Wendekreises,

Figur 10    eine schematische Darstellung zur Verdeutlichung des Sichtbereiches beim Ankoppeln,

Figur 11    eine schematische Darstellung zur Berechnung einer Achslastverschiebung.

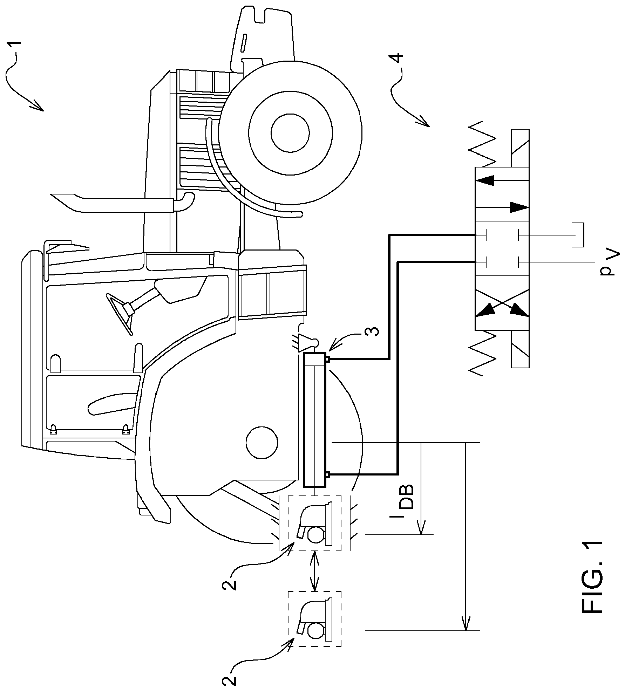

Figur 1 zeigt ein Arbeitsfahrzeug 1, das mit einer Anhängevorrichtung 2 versehen ist, die mittels eines Aktors 3 in horizontaler Richtung in bzw. entgegen Fahrtrichtung längsverschiebbar angeordnet ist. Figur 1 zeigt die Anhängevorrichtung 2 sowohl in einer ersten, mit Blick auf die Figur rechten Position, nahe am Arbeitsfahrzeug 1 und in einer zweiten, mit Blick auf die Figur linken Position mit entsprechendem Abstand zum Arbeitsfahrzeug 1.

Der Aktor 3 wird über eine Anordnung 4 angesteuert. Bei der Anordnung 4 zur Ansteuerung des Aktors 3 wird dabei mit pv der Versorgungsdruck bezeichnet. Die Längsverschiebung wird in den Figuren mit dem Symbol $I_{DB}$ dargestellt. In Figur 1 sind zwei Positionen der Anhängevorrichtung dargestellt. Dabei weist die erste Position eine kürzere Längsverschiebung und die zweite Position eine größere Längsverschiebung $I_{DB}$ auf.

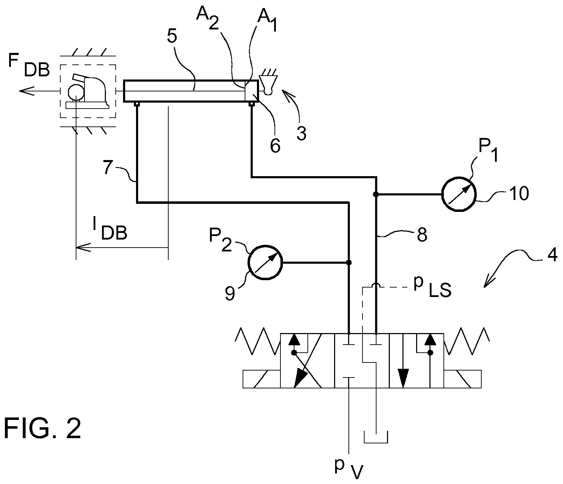

Figur 2 zeigt eine schematische Darstellung eines Aktors 3 und einer Anordnung 4 zur Steuerung bzw. Regelung des Aktors 3. Bei dem Aktor 3 handelt es sich um einen Hydraulikzylinder, in dem ein Kolben verschiebbar angeordnet ist. Dabei wird mit $p_{LS}$ der Load Sensing Druck bezeichnet. Der Kolben trennt zwei Räume 5, 6 in dem Zylinder. Zum Raum 5 führt eine erste Leitung 7 und zum Raum 6 eine zweite Leitung 8.

Gegenüber dem Einsatz von herkömmlichen Radgewichten bietet die Erfindung den Vorteil einer stufenlosen Achslastverschiebung. Diese stufenlose Verschiebung erweist sich gegenüber dem Einsatz von Radgewichten als besonders günstig, da Radgewichte nur in festen Gewichtsabstufungen von zum Beispiel 50 kg, 100 kg, 250 kg erhältlich sind. Bei der Radlastverteilung kann zudem eine Zugkraft $F_{DB}$ zur Verschiebung von Achslast von der Vorder- auf die Hinterachse führen. Die erfindungsgemäße Vorrichtung ermöglicht es, diesen Effekt in bestimmten Grenzen zu kompensieren.

Um dies zu realisieren, muss der Effekt der Achslastverschiebung über die Zugkraft $F_{DB}$ quantitativ erfasst werden.

Bei der Darstellung in Figur 2 ist die Vorrichtung mit zwei Drucksensoren 9 und 10 versehen. Der Drucksensor 9 erfasst den Druck in der Leitung 7 bzw. dem Raum 5. Dieser Druck wird mit $p_2$ bezeichnet. Der Sensor 10 erfasst den Druck in der Leitung 8 bzw. dem Raum 6. Der Druck wird mit $p_1$ bezeichnet.

Bei einer Realisierung der Erfindung mittels hydraulischen Zylindern kann die Zugkraft $F_{DB}$ mit Hilfe von Drucksensoren 9, 10 ermittelt werden. Durch Ermittlung des Drucks $p_2$ im Stangenraum 5 des Hydraulikzylinders und des Drucks $p_1$ im stangenlosen Raum 6 des Zylinders kann über die entsprechenden Flächen $A_2$ bzw. $A_1$ die Zugkraft $F_{DB}$ nach der folgenden Formel berechnet werden:

$$F_{DB} = A_2 \cdot p_2 - A_1 \cdot p_1$$

Durch die Bestimmung der Zugkraft kann beispielsweise die Zuglast bestimmt werden. Dies ist für die Fahrstrategie des Arbeitsfahrzeugs von Bedeutung.

Weiterhin ermöglicht eine Ermittlung der Zugkraft $F_{DB}$ eine Realisierung einer Bremsstrategie des Gespanns. Für eine optimale Bremsung des Traktor-Anhängergespanns ist eine kraftfreie Traktor-Anhängerverbindung optimal, bei der die Zugkraft $F_{DB}$ im optimalen Fall gleich null wird. Durch die Bestimmung der Zugkraft kann dieses Ziel durch eine geeignete Bremsstrategie realisiert werden.

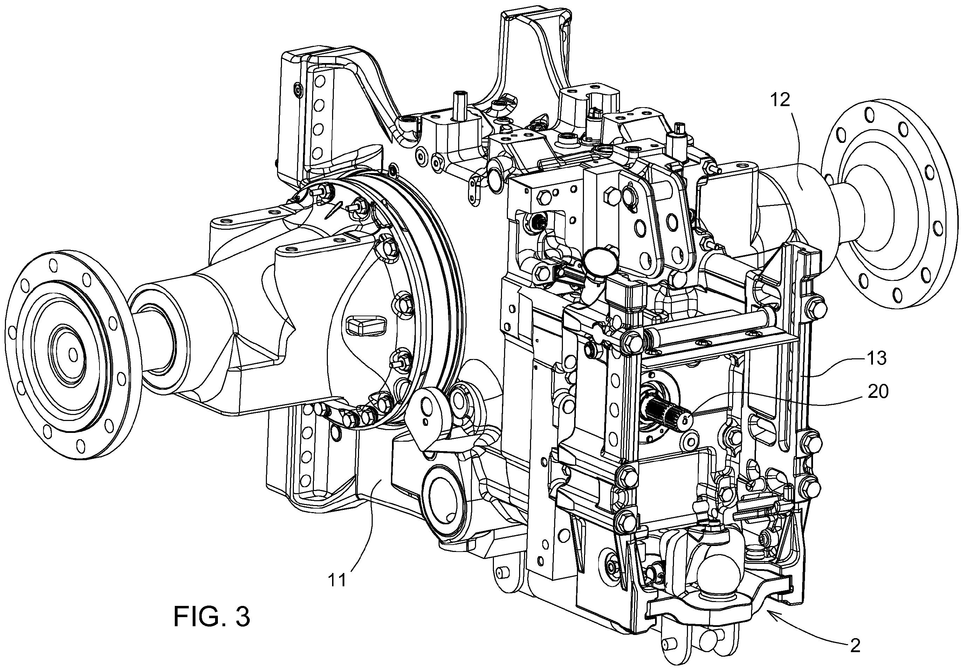

Figur 3 zeigt eine Tragstruktur 11 des Arbeitsfahrzeugs 1, das im Ausführungsbeispiel als Hinterachsgehäuse ausgeführt ist, sowie die Hinterachse 12 eines Traktors. Weiterhin ist ein Anbaublock 13 dargestellt, in den eine Anhängevorrichtung 2 integriert ist.

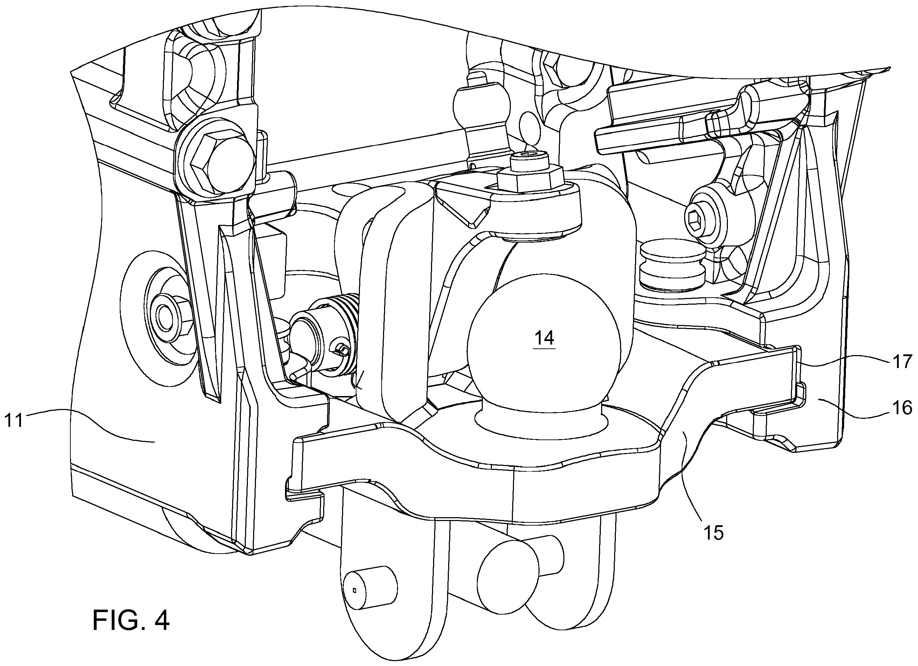

Figur 4 zeigt eine vergrößerte Darstellung des Bereichs in Figur 3. Bei der Darstellung gemäß Figur 4 ist das Kupplungsglied 14 als Kugelkopfkupplung ausgeführt. Das Kupplungsglied 14 ist auf einem Halteelement 15 angeordnet, das als Platte ausgeführt ist. Das Halteelement 15 ist verschieblich in einem Führungselement 16 angeordnet. Es handelt sich bei dem Führungselement 16 um eine Ausformung des Anbaublocks 13, der eine Nut zur Führung des Halteelements 15 aufweist.

Die Nut des Führungselements 16 ist U-förmig ausgebildet und umgreift das plattenartig ausgebildete Halteelement 15 an den seitlich nach außen ragenden Stirnseiten 17. Erfindungsgemäß ist das Halteelement 15 in Längsrichtung verschiebbar angeordnet, so dass es mit einem in Figur 4 Aktor nach hinten ausgefahren werden kann.

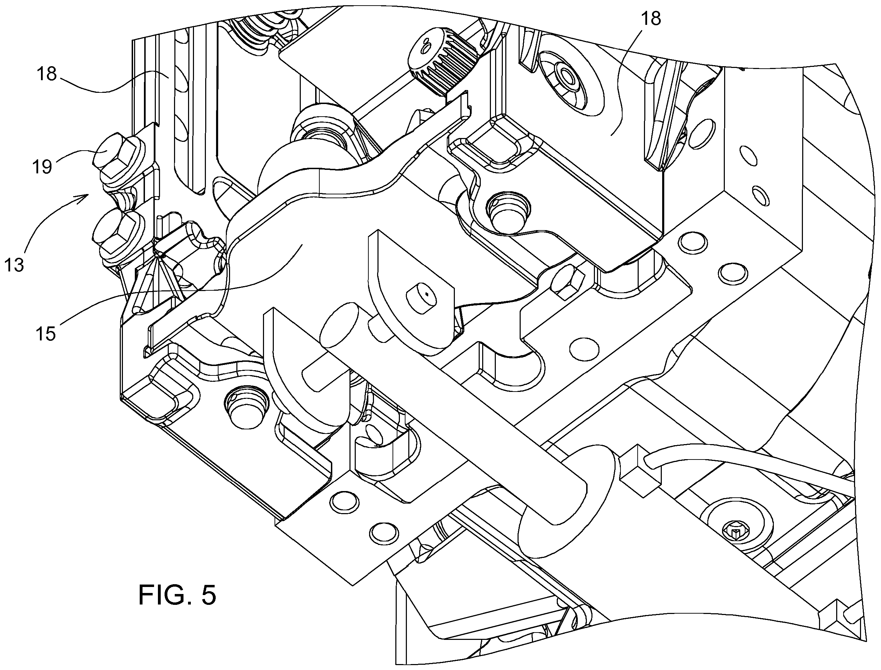

Figur 5 zeigt eine perspektivische Darstellung des Anbaublocks 13 von unten. Der Anbaublock 13 umfasst zwei Seitenwangen 18, die vertikal ausgerichtet sind und parallel zueinander angeordnet sind. Der Anbaublock 13 ist über mindestens ein Befestigungsmittel 19 mit einem Heckteil des Arbeitsfahrzeugs 1 verbunden. Bei dem Heckteil handelt es sich vorzugsweise um ein Zapfwellengehäuse oder ein Differentialgehäuse eines Traktors.

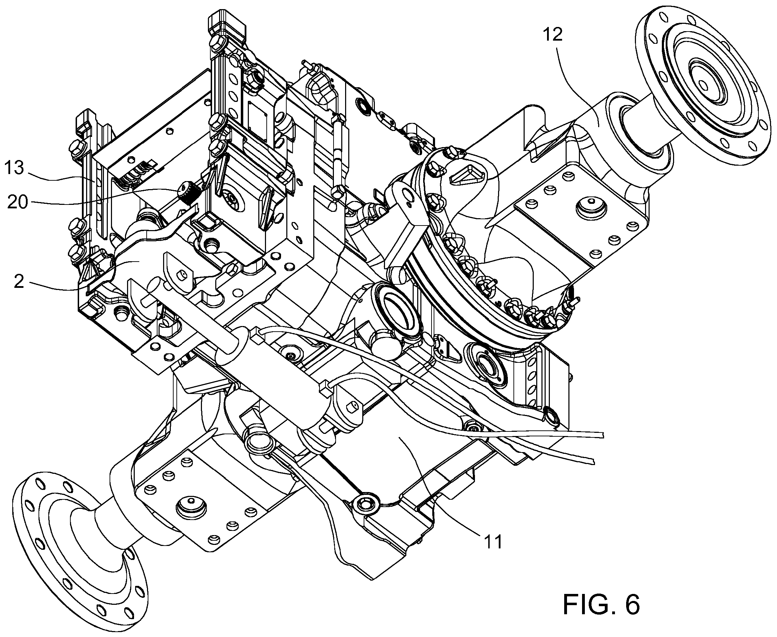

In den Figuren 3 und 6 ist eine Zapfwelle 20 sichtbar. Bei der Darstellung gemäß Figur 5 wird der Aktor, der das Halteelement 15 mitsamt dem Kupplungsglied 14 innerhalb einer Führungsnut axial nach hinten verfährt gezeigt.

Figur 6 zeigt in einer perspektivischen Darstellung von unten eine Tragstruktur 11 des landwirtschaftlichen Arbeitsfahrzeugs 1, die ein Hinterachsgehäuse eines Traktors bildet, sowie die seitlich nach außen ragende Traktorhinterachse 12. Der Anbaublock 13 ist mit der Tragstruktur 11 verbunden. Der Anbaublock 13 umfasst die verschieblich angeordnete Anhängevorrichtung 2.

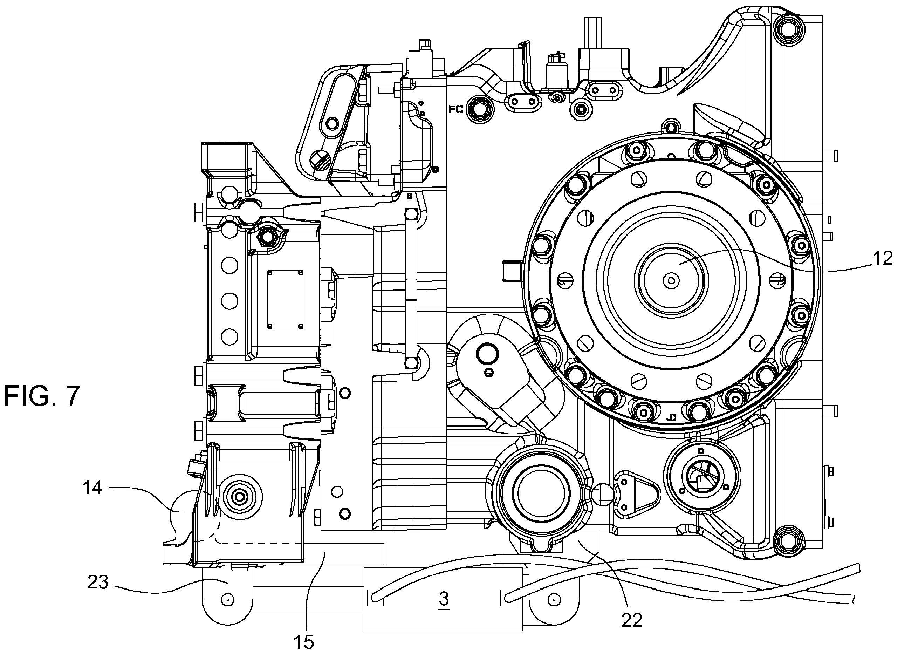

Figur 7 zeigt in einer Seitenansicht das Hinterachsgehäuse eines Traktors mit einem Anbaublock 13, der die ausfahrbare Anhängevorrichtung 2 umfasst. Über ein Befestigungselement 22 ist der Aktor 3 mit der Tragstruktur 11 verbunden. Der Aktor 3 ist unten am Hinterachsgehäuse befestigt. Der Aktor 3 weist am Ende einer ausfahrbaren Stange ein Befestigungselement 23 auf, mit dem die ausfahrbare Hydraulikstange des Aktors 3 mit dem Halteelement 15 der Anhängevorrichtung 2 verbunden ist. Das Halteelement 15 ist gemäß der Darstellung in Figur 7 als sich längs in Fahrrichtung erstreckende rechteckige Platte ausgeführt. Die Längserstreckung ermöglicht ein Ausfahren der Platte nach hinten, so dass das Kupplungsglied 14 in die gewünschte Position gebracht werden kann. Das als langgestreckte Platte ausgeführte Halteelement 15 wird innerhalb einer Nut des Führungselements 16 verschoben.

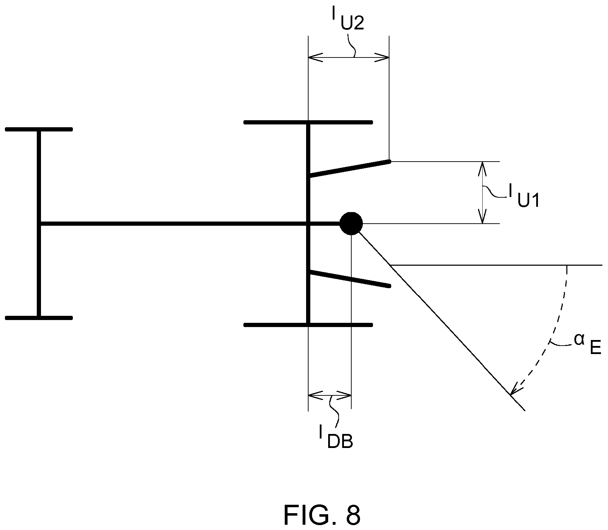

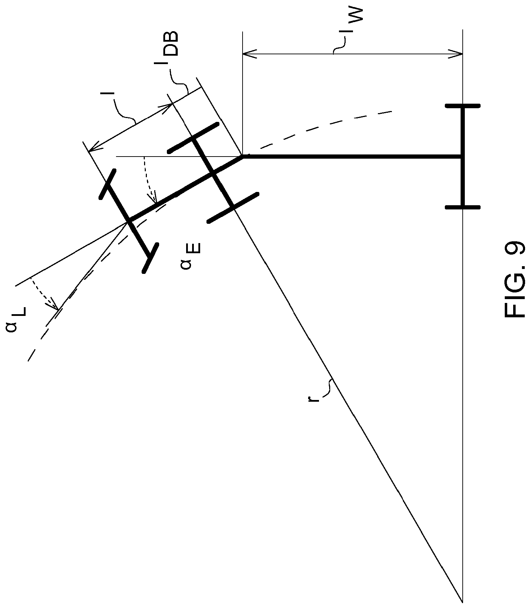

Die Figuren 8 und 9 zeigen eine Wendekreisverringerung eines Gespanns aus einem Arbeitsfahrzeug und einem Anbaugerät. Der maximale Einschlagwinkel $\alpha_E$ wird über die Unterlenker eines Hubwerks begrenzt. Die im Folgenden angenommenen geometrischen Proportionen dienen der Veranschaulichung der Größenordnungen und orientieren sich an marktüblichen Traktoren. Mit einer marktüblichen Konfiguration ($l_{DB}$ = 0.7m) resultiert folgender maximal möglicher Einschlagwinkel:

$$\alpha_E = \arctan\left(\frac{l_{U1}}{l_{U2} - l_{DB}}\right) \approx 33°$$

woraus sich der folgende Wenderadius des Hinterachsmittelpunkts des Traktors ergibt:

$$r = \frac{l_W + \cos(\alpha_E)l_{DB}}{\sin(\alpha_E)} \approx 13\text{m}$$

mit dem Lenkwinkel

$$\alpha_L = \arctan\left(\frac{l}{r}\right) \approx 12.6°$$

Bei einer Vergrößerung von $l_{DB}$ um Δ= 0.3m auf $l_{DB}$ = 1 m kann bereits eine signifikante Reduzierung des Wenderadius r erreicht werden:

$$l_{DB} = 1.00\text{m} \rightarrow \alpha_E \approx 53° \rightarrow r \approx 8.9\text{m} \rightarrow \alpha_L \approx 18°$$

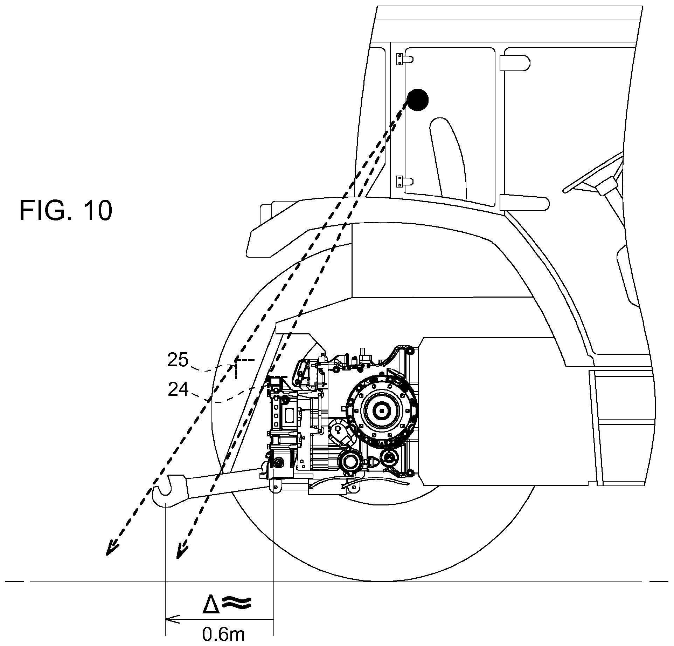

In Figur 10 ist dargestellt wie durch die erfindungsgemäße Vorrichtung die Sichtbarkeit beim An- bzw. Abkoppeln des Anbaugerätes an das Arbeitsfahrzeug gewährleistet werden kann. Das als Kugelkopfkupplung ausgeführte Kupplungsglied 14 wird bei herkömmlichen Anhängevorrichtungen 2 nach dem Stand der Technik am unteren Ende einer Zugmaulschiene 24 horizontal eingeschoben. Daher ist sie aus der Kabine vom Fahrer nicht einsehbar. Ist ein Zugmaul 25 montiert, schränkt dieses die Sicht auf die Kugelkopfkupplung maßgeblich ein. Die Sichtfeldeinschränkung steigt dabei mit zunehmender Höhe der Zugmaulanordnung an. Ist das Zugmaul 25 in der obersten Lochung der Zugmaulschiene 24 fixiert, muss das Kupplungsglied 14 bis auf die Höhe der Unterlenker, Δ ≈ 0.6m, längs verschoben werden, damit sie von der Kabine einsehbar ist. Vorzugsweise erfolgt dieses Ausfahren ohne volle Stützlast.

Ist kein Zugmaul 25 moniert, ist das Sichtfeld über die Zugmaulschiene 24 behindert. In diesem Fall reicht eine Längsverschiebung von Δ≈ 0.3m um den Sichtkontakt von der Kabine herstellen zu können.

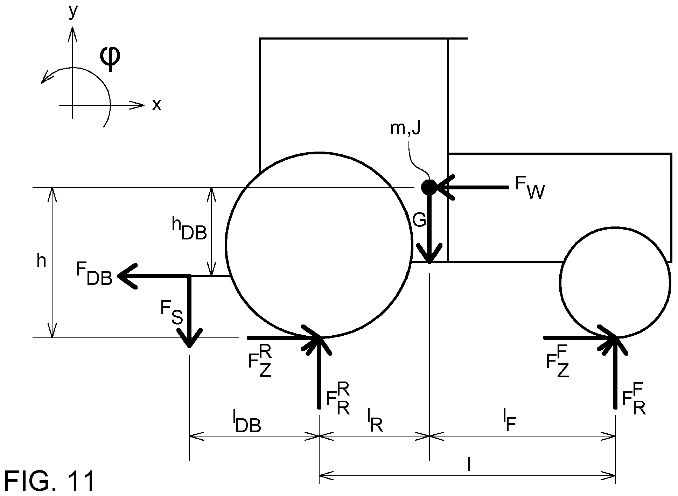

Figur 11 zeigt die Wirkungsweise der erfindungsgemäßen Vorrichtung zur Achslastverschiebung. Um den Einfluss und die Wirkungsweise einer stufenlos längs verschiebbaren Kugelkopfkupplung darstellen zu können, werden die maßgebenden Zusammenhänge zunächst an einem starren Einkörpermodell eines Traktors in der Ebene hergeleitet

$$m\ddot{x} = F_Z^R + F_Z^F - F_{DB} - F_W$$

$$m\ddot{y} = F_R^R + F_R^F - mg - F_S$$

$$J\ddot{\varphi} = F_Z^F h + F_Z^R h - F_{DB}h_{DB} + F_S(l_{DB} + l_R) + l_F F_R^F - l_R F_R^R$$

Die Vertikal- und Nickdynamik sind gegenüber der Längsdynamik vernachlässigbar

$$\dot{x} \gg \dot{y} \ \wedge \ \dot{x} \gg \dot{\varphi} \rightarrow \ddot{y}! = 0 \ \wedge \ \ddot{\varphi}! = 0$$

Des Weiteren ergibt sich der Einfluss der Gewichtskraft in Abhängigkeit des Steigungswinkels $\gamma$ wie folgt:

$$G = mg\cos(\gamma)$$

$$F_W = mg\sin(\gamma).$$

Die Achslasten ergeben sich zu

$$F_R^R = \frac{h}{l}m\ddot{x} + \left(\frac{h}{l}\sin(\alpha) + \frac{l_F}{l}\cos(\alpha)\right)mg + \frac{h - h_{DB}}{l}F_{DB} + \left(1 + \frac{l_{DB}}{l}\right)F_S$$

$$F_R^F = -\frac{h}{l}m\ddot{x} - \left(\frac{h}{l}\sin(\alpha) - \frac{l_R}{l}\cos(\alpha)\right)mg - \frac{h - h_{DB}}{l}F_{DB} + \frac{l_{DB}}{l}F_S$$

$$\underbrace{\qquad}_{\text{Beschleunigung}} \quad \underbrace{\qquad}_{\substack{\text{Gewichtskraft}\\\text{Steigung}}} \quad \underbrace{\qquad}_{\text{Zugkraft}} \quad \underbrace{\qquad}_{\text{Stützlast}}$$

Die unterschiedlichen Einflüsse auf die Achslasten und deren Verschiebung untereinander sind somit bekannt.
Über die Erfindung kann in Abhängigkeit der Stützlast $F_S$ über die Variation von $l_{DB}$ die Achslast linear verschoben werden.
Typischerweise werden Radgewichte bis zu einem Gesamtgewicht von $m_{RG}$ = 600 kg an der Hinterachse angebracht. Bei einer Stützlastwirkung von $m_S$ = 4000 kg ergibt sich eine notwendige Längsverschiebung von

$$\Delta = \frac{m_{RG}}{m_S}l \approx 0.4\text{m}$$

zum Erreichen der identischen Radlasterhöhung an der Hinterachse durch Einsatz der Erfindung. Dabei ist zu beachten, dass durch die Erfindung die Radlasterhöhung an der Hinterachse zur entsprechenden Entlastung der Vorderachse führt. Dazu wird bei einer besonders vorteilhaften Variante der Erfindung ein Frontballast angebracht.

**Patentansprüche**

1. Anhängevorrichtung für ein landwirtschaftliches Arbeitsfahrzeug, umfassend ein als Kugelkopfkupplung ausgeführtes Kupplungsglied (14), das auf einem als Platte ausgeführten Halteelement (15) in Längsrichtung verschiebbar in einem Führungselement (16) angeordnet ist, wobei das Kupplungsglied (14) mit einem Aktor (3) zur Verschiebung in Verbindung steht, **dadurch gekennzeichnet, dass** es sich bei dem Führungselement (16) um eine Ausformung eines Anbaublocks (13), in den die Anhängevorrichtung (2) integriert ist, handelt, wobei der Anbaublock (13) eine Nut zur Führung des Halteelements (15) aufweist, die U-förmig ausgebildet ist und die das plattenartig ausgebildete Halteelement (15) an den seitlich nach außen ragenden Stirnseiten (17) umgreift.

2. Anhängevorrichtung nach Anspruch 1, **dadurch gekennzeichnet, dass** das Kupplungsglied (14) in und entgegen der Fahrtrichtung vorzugsweise weitgehend horizontal verschiebbar angeordnet ist.

3. Anhängevorrichtung nach Anspruch 1 oder 2, **dadurch gekennzeichnet, dass** der Aktor (3) einen Arbeitszylinder, vorzugsweise einen Pneumatikzylinder und/oder einen Hydraulikzylinder zur Verschiebung umfasst.

4. Anhängevorrichtung nach einem der Ansprüche 1 bis 3, **dadurch gekennzeichnet, dass** das Kupplungsglied (14) stufenlos verschiebbar ist.

5. Anhängevorrichtung nach einem der Ansprüche 1 bis 4, **dadurch gekennzeichnet, dass** die Vorrichtung mindestens einen Sensor 9, 10 und mindestens eine Einheit umfasst, zur Anpassung einer Position des Kupplungsgliedes (14).

**Claims**

1. Towing device for an agricultural working vehicle, comprising a coupling member (14) which is embodied as a ball head coupling and disposed so as to be displaceable in a longitudinal direction in a guide element (16) on a holding element (15) embodied as a plate, wherein the coupling member (14) for displacement is connected to an actuator (3), **characterized in that** the guide element (16) is a design embodiment of an attachment block (13) in which the towing device (2) is integrated, wherein the attachment block (13) has a groove for guiding the holding element (15), said groove being configured to be U-shaped and encompassing the holding element (15), configured in the manner of a plate, on the end sides (17) that laterally protrude outwards.

2. Towing device according to Claim 1, **characterized in that** the coupling member (14) is disposed so as to be displaceable, preferably largely horizontally, in and counter to the direction of travel.

3. Towing device according to Claim 1 or 2, **characterized in that** the actuator (3) for displacement comprises a working cylinder, preferably a pneumatic cylinder and/or a hydraulic cylinder.

4. Towing device according to one of Claims 1 to 3, **characterized in that** the coupling member (14) is infinitely displaceable.

5. Towing device according to one of Claims 1 to 4, **characterized in that** the device comprises at least one sensor 9, 10 and at least one unit for adapting a position of the coupling member (14).

**Revendications**

1. Dispositif d'attelage pour un véhicule de travail agricole, comprenant un organe d'accouplement (14) réalisé sous forme d'accouplement à tête sphérique, qui est disposé sur un élément de retenue (15) réalisé sous forme de plaque, de manière à pouvoir être décalé dans un élément de guidage (16), dans lequel l'organe d'accouplement (14) est en liaison avec un actionneur (3) en vue du décalage, **caractérisé en ce que** l'élément de guidage (16) est une forme d'un bloc de montage (13) dans lequel est intégré le dispositif d'attelage (2), dans lequel le bloc de montage (13) présente une rainure pour guider l'élément de retenue (15), qui est réalisée en forme de U et qui saisit l'élément de retenue (15) réalisé en forme de plaque au niveau des faces frontales (17) faisant latéralement saillie vers l'extérieur.

2. Dispositif d'attelage selon la revendication 1, **caractérisé en ce que** l'organe d'accouplement (14) est disposé de manière à pouvoir être décalé, de préférence de manière substantiellement horizontale, dans le sens de la marche et dans le sens contraire.

3. Dispositif d'attelage selon la revendication 1 ou 2, **caractérisé en ce que** l'actionneur (3) comprend un cylindre de travail, de préférence un vérin pneumatique et/ou un vérin hydraulique, pour le décalage.

4. Dispositif d'attelage selon l'une quelconque des revendications 1 à 3, **caractérisé en ce que** l'organe d'accouplement (14) peut être décalé en continu.

5. Dispositif d'attelage selon l'une quelconque des revendications 1 à 4, **caractérisé en ce que** le dispositif comprend au moins un capteur 9, 10 et au moins une unité pour adapter une position de l'organe d'accouplement (14) .

FIG. 1

$I_{DB}$

$p_V$

FIG. 2

FIG. 3

FIG. 4

FIG. 5

FIG. 6

EP 3 427 560 B1

FIG. 7

FIG. 8

FIG. 10

FIG. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013211510 A1
- DE 102013211516 A1
- EP 2889166 A1